# EUROPEAN PATENT SPECIFICATION

(11) **EP 1 511 237 B1**
(45) Date of publication and mention of the grant of the patent: **19.09.2007**
(21) Application number: 04006981.7
(22) Date of filing: 23.03.2004
(51) Int. Cl.: H04L 12/56, H04L 12/28

(54) **Wireless Communication device and a method for establishing communication connection**
Drahtloses Kommunikationsgerät und Verfahren zum Aufbau einer Kommunikationsverbindung
Unité de communication sans fil et procédé pour établir une connection de communication

(30) Priority: 29.08.2003 JP 2003307245
(43) Date of publication of application: 02.03.2005
(73) Proprietor: KABUSHIKI KAISHA TOSHIBA, Tokyo (JP)
(72) Inventor: Ide, Kenichi c/o Toshiba Corporation, Tokyo 105-8001 (JP)
(74) Representative: Henkel, Feiler & Hänzel

(56) References cited:
- EP-A- 0 886 456
- EP-A- 1 276 337
- US-B1- 6 349 352
- PATENT ABSTRACTS OF JAPAN vol. 2003, no. 04, 2 April 2003 (2003-04-02) & JP 2002 359873 A (KYOCERA CORP), 13 December 2002 (2002-12-13)
- PATENT ABSTRACTS OF JAPAN vol. 2003, no. 04, 2 April 2003 (2003-04-02) & JP 2002 368761 A (TOKYO DENSHI SEKKEI KK), 20 December 2002 (2002-12-20)

## Description

This invention relates to a communication device that communicates with an external device, and a method for establishing the communication connection between devices.

Recently, it is common for personal computers and personal digital assistants to support wireless communications with other devices without any required cable connections. One type of communication protocol of the wireless communication function is BLUETOOTH®, which is a well-known, short range radio link.

In wireless communication complying with BLUETOOTH®, for example, when connecting device A and device B, the device A searches for devices complying with BLUETOOTH® wireless communication including device B (or device B may search for devices). Then, the user selects a desired device B out of all devices searched at this time.

Given the growing popularity of wireless communications, over time, it is expected that the number of devices having such wireless communication functionality will greatly increase. As a result, conventional wireless connection procedures will require more time and labor by the user to select a desired device. For some users, this additional time and labor may outweigh the overall convenience of use.

Japanese Patent Application Publication (KOKAI) No. 2002-359873 discloses a device that decreasing the searching number of selection candidates by checking profiles that the searched devices have. If the searched device does not have any profile that the user selected on the searching device, then the searched . device is excluded from the candidates.

In the devices disclosed in this reference, however, the user is required to select the user designation profile for reducing the searching number of selection candidates. Therefore, if device A is desired to be connected to device B at one time or connected to device C at other times, every time the connection object is changed, the user needs to select the profile to be used therein again. That is, the user is forced to comply with a complicated selection procedure, and may also experience inconvenience during use.

Further, along with recent advancement in semiconductor manufacture technology, this kind of information processing apparatus is much reduced in size in order to improve the portability, not having the display device necessary for selecting the profile to be used or having only a minimum limit of operation buttons. In the electronic device manufactured in such trend, it is very difficult for the user to select the profile.

The invention is devised in the light of such background, and it is hence an object thereof to provide a communication device and a method for establishing communication connection as connection destination in a simple procedure.

The above object is achieved by a communication device according to claim 1 and by a method according to claim 17. The depended claims are directed to advantageous aspects of the invention.

The invention can be more fully understood from the following detailed description when taken in conjunction with the accompanying drawings, in which:
The accompanying drawings, which are incorporated in and constitute a part of the specification, illustrate embodiments of the invention, and together with the detailed description of the embodiments given below, serve to explain the principles of the invention.
FIG. 1 is an exemplary diagram showing an operating environment of a communication device according to an embodiment of the present invention;
FIG. 2 is an exemplary diagram showing the existing status of a device group when searching in a case assumed in the embodiment;
FIG. 3 is an exemplary block diagram showing a schematic configuration of an audio player as a searching device and a remote loudspeaker as a device being searched in the embodiment;
FIG. 4 is an exemplary block diagram showing functional blocks of the audio player as the searching device and the remote loudspeaker as the device being searched in the embodiment;
FIG. 5 is an diagram showing operation of the searching device and the device being searched within a wireless communication area, together with flow of the time, in the embodiment;
FIG. 6 is an exemplary diagram showing a first set (P) of the device group obtained by a first search of the audio player in the embodiment;
FIG. 7 is an exemplary diagram showing a second set (Q) of the device group obtained by a second search of the audio player in the embodiment;
FIG. 8 is an exemplary diagram showing a third set (R) of the device group obtained by the audio player as a result of comparison between the first set (P) and the second set (Q) in the embodiment; and
FIG. 9 is an exemplary flowchart showing the flow of the operation when the audio player selects the loudspeaker to be connected as a connection object in the embodiment.

Various embodiments according to the present invention will be described hereinafter with reference to the accompanying drawings. In general, according to one embodiment of the invention, a communication device comprises a communication unit that communicates with an external device. The communication device may be adapted as a computer, a personal digital assistant, an audio player, or the like. The communication device further comprises an outputting device for outputting an inquiry to an external device surrounding the communication device through the communication unit both for a first time and for a second time, a receiving device for receiving a response to the inquiry from an external device, a detecting device for detecting a connection object coming out of the external device that did not respond to the inquiry within the first time, and did respond to the inquiry within the second time, and a establishing device for establishing a communication connection with the connection object detected by the detecting device.

In the following description, certain terminology is used to describe features of the invention. For example, the term "unit" may represent hardware and/or a software module that are configured to perform one or more functions. The term "connection object" is an audio output device targeted for wireless communications with an audio input device. It is contemplated, however, that the invention does not require the devices to transmit audio, but may be utilized for the transmission of video or other types of data.

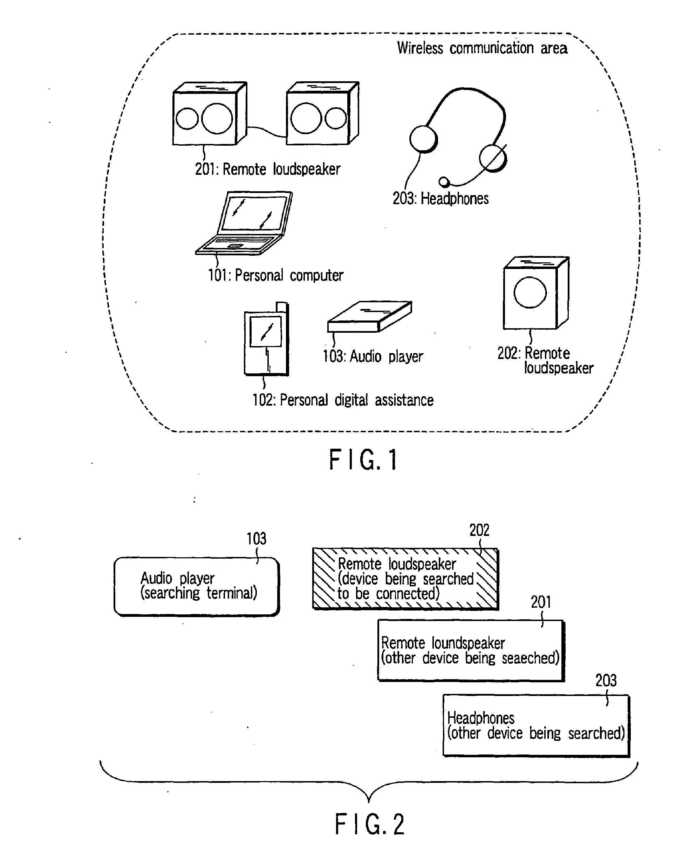

According to an embodiment, FIG. 1 shows an operating environment of communication devices located within a wireless communication area. Various devices shown in FIG. 1 are in communication with each other by applying a connection object selecting method of the embodiment, and an exemplary case of audio playback is assumed herein. More specifically, audio data played by an audio playback device such as a personal computer 101, a personal digital assistant 102, or an audio player 103 is transmitted to an audio output device such as a first remote loudspeaker 201, a second remote loudspeaker 202, or headphones 203, and audio and/or sound is outputted. This embodiment is explained on the basis of wireless communication conforming to BLUETOOTH@. But the connection object selecting method of the embodiment is not limited to wireless communications alone, and may be similarly applied in wired communications by a physical medium (e.g., cable connection) .

In such environment, it is assumed that there is a user who would like to listen to the music, using the audio player 103 and the remote loudspeaker 202. The audio player 103 playbacks the audio data for the music, and transmits it to the remote loudspeaker 202. The remote loudspeaker 202 outputs the music in accordance with the audio data transmitted from the audio player 103 over a wireless communication connection. Therefore, the wireless communication connection between the audio player 103 and the remote loudspeaker 202 is established before transmission. When establishing the communication connection, a method for selecting the connection object is applied as further described in FIG. 2.

FIG. 2 shows the existing status of a device group when searching in this assumed case. In this example, the audio player 103 is the searching device and the remote loudspeaker 202 is the device being searched to be connected. On the other hand, the remote loudspeaker 201 and the headphones 203 are the other devices to be searched. The remote loudspeaker 201, the remote loudspeaker 202, and the headphones 203 are devices of the similar type in function, and only the loudspeaker 202 is different because the user desires the loudspeaker 202 as the connection object of the audio player 103.

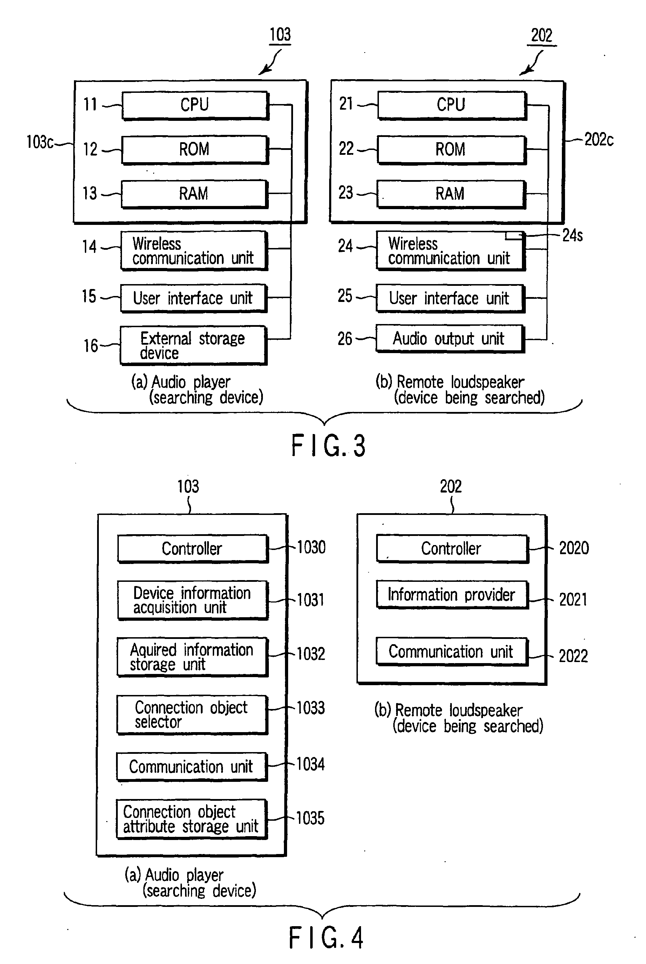

FIG. 3 shows a schematic configuration of the audio player 103 as the searching device and the remote loudspeaker 202 as the device being searched. As shown, the audio player 103 comprises a control unit 103C including a CPU 11, a non-volatile memory (ROM) 12, and a volatile memory (RAM) 13. The control unit 103C is coupled to a wireless communication unit 14, a user interface unit 15, an external storage device 16, and other functional parts of the audio player 103. The configuration of the audio player 103 performs the functions shown in FIG. 4. The user interface unit 15 comprises a small LCD for message display, and a few operation buttons for inputting instructions from the user.

Similarly, the remote loudspeaker 202, as shown in FIG. 3, comprises a control unit 202C including a CPU 21, a ROM 22, and a RAM 23. The control unit 202C is coupled to a wireless communication unit 24, a user interface unit 25, an audio output unit 26, and other functional units of the remote loudspeaker 202. The configuration of the remote loudspeaker 202 performs the functions shown in FIG. 4. The wireless communication unit 24 has a switch 24S, which turns on and/or off the communication function of the wireless communication unit.24.

FIG. 4 shows functional blocks of the audio player 103 as the searching device and the remote loudspeaker 202 as the device being searched. FIG. 4 shows a particular function of the connection object selecting method of the embodiment.

As shown, a controller 1030 is a control function performed by the control unit 103C, and administrates overall control of the audio player 103.

A device information acquisition unit 1031 is a function that acquires device information from the device being searched by way of a communication unit 1034, and the acquired device information is recorded in an acquired information storage unit 1032. The device information acquisition unit 1031 is a function performed by the control unit 103C and the wireless communication unit 14. The RAM 13 operates as the acquired information storage unit 1032 while the communication unit 1034 is a function performed by the wireless communication unit 14.

Acquisition of device information by the device information acquisition unit 1031 is executed twice in the connection object selecting method of this embodiment. Herein, the device group of which device information is acquired at the first time is defined as a first set (P), and the device group of which device information is acquired at the second time is defined as a second set (Q). The device information acquisition unit 1031 records the acquired device information in the acquired information storage unit 1032 in a format so that each device of which device is acquired may be later distinguished whether to belong to the first set (P) or the second set (Q).

A connection object selector 1033 is a function that selects the device as candidate's object of connection on the basis of the device information recorded in the acquired information storage unit 1032 and attributes information of the connection object device preliminarily stored in a connection object attribute storage unit 1035. The connection object selector 1033 is a function performed by the control unit 103C and the user interface unit 15. ROM 12 and/or RAM 13 operate as the connection object attribute storage unit 1035.

The attribute information stored in the connection object attribute storage unit 1035 is not perfect information for specifically identifying the connection object device, but is assumed to have a certain margin for reducing into specific devices to be connected from the group of devices to be searched. For example, if the remote loudspeaker 202 is the device at connection object, the attribute information is an attribute of "loudspeaker." Since there are a plurality of remote speakers having the same attribute, a specific remote loudspeaker cannot be identified by this attribute alone. However, from a group of multiple devices having various attributes, only those having the attribute of "loudspeaker" may be limited. In the case of the audio player, if the object of connection is only the device having the attribute of "loudspeaker," by setting this attribute preliminarily in the connection object attribute storage unit 1035, the user's work of setting the connection object attribute may be saved.

On the other hand, FIG. 4 further shows functional blocks of the remote loudspeaker 202. A controller 2020 is a control function performed by the control unit 202C, and administrates overall control of the remote loudspeaker 202. A device information provider 2021 transmits the device information of the remote loudspeaker 202 to the audio player 103 by way of a communication unit 2022 when device information is requested from the searching device of the audio player 103. The device information provider 2021 is a function performed by the control unit 202C and the wireless communication unit 24. The communication unit 2022 is a function that the wireless communication unit 24 has.

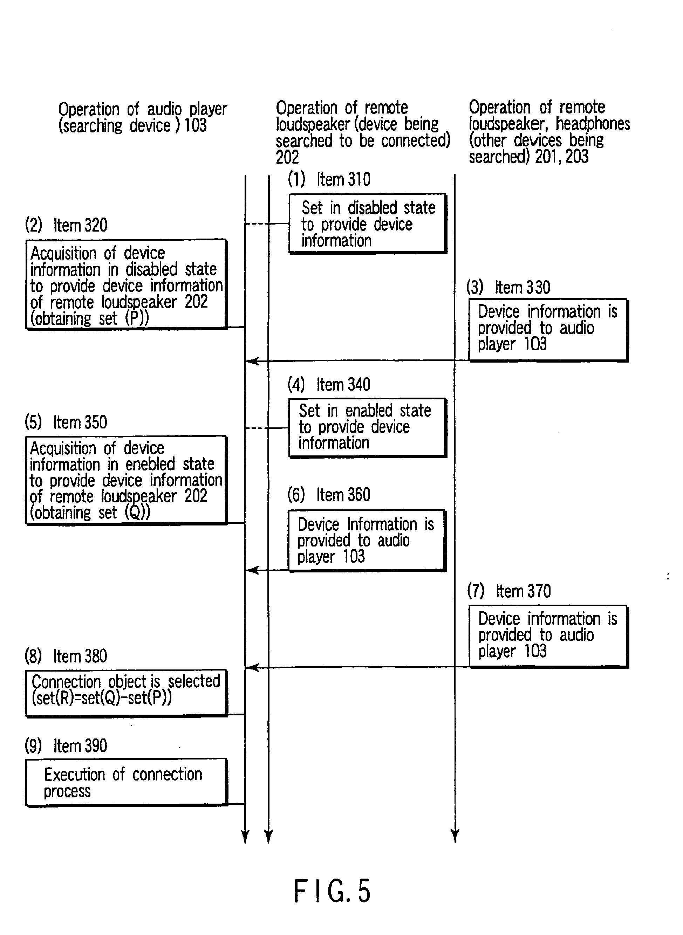

Referring now to FIGS. 5 to 8, the principle of establishing the communication connection between the audio player 103 and the remote loudspeaker 202 by the connection object selecting method will be described.

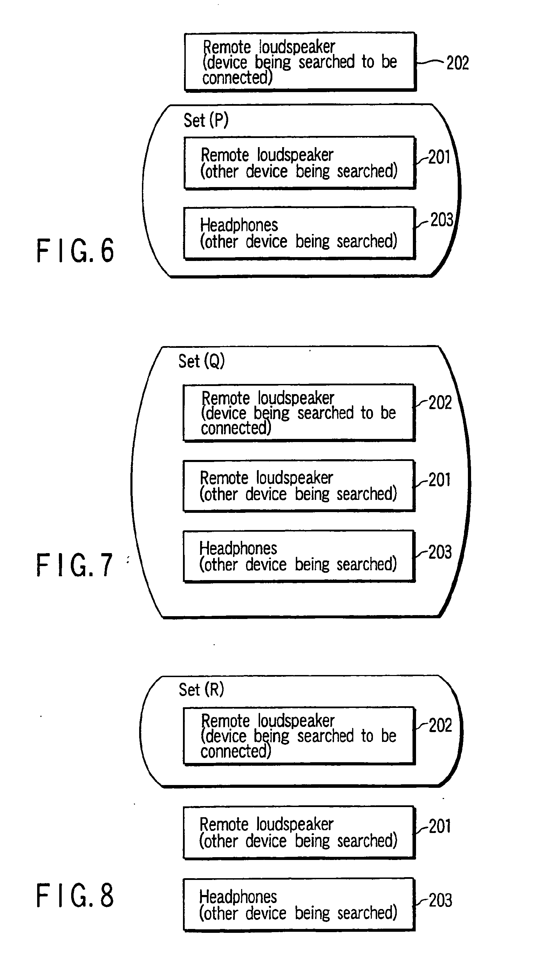

FIG. 5 shows operation of devices within the wireless communication area together over time. The devices shown in FIG. 5 are the audio player 103 as the searching device, the remote loudspeaker 202 as the device being searched for connection, and the remote loudspeaker 201 and headphones 203 as other devices to be searched. FIGS. 6 to 8 show the sets obtained during operation in FIG. 5.

At first, the remote loudspeaker 202, namely the desired device, is placed in a Disabled state by turning off the switch 24S. Since the wireless communication unit 24 is turned off, the remote loudspeaker 202 is not able to provide device information to the searching device (see item 310 in FIG. 5).

While the remote loudspeaker 202 is disabled, the audio player 103 as the searching device acquires device information from the device being searched by broadcasting a first inquiry (see item 320 in FIG. 5).

The remote loudspeaker 202 does not provide the device information, but other devices to be searched, that is, the remote loudspeaker 201 and the headphones 203 provide the device information corresponding to the first inquiry if these devices are placed in Enabled states to provide device information (see item 330 in FIG. 5).

Accordingly, the audio player 103 stores the obtained device information in the acquired information storage unit 1032. At the same time, the set of the devices from which device information is obtained at this time is stored as a first set (P). The first set (P) is as shown in FIG. 6.

Next, the remote loudspeaker 202 is placed in an Enabled state by turning on of the switch 24S of wireless communication unit 24. As the wireless communication unit 24 is powered on, the remote loudspeaker 202 is able to provide device information to the searching device (item 340 in FIG. 5).

While the remote loudspeaker 202 is now placed in the Enabled state, the audio player 103 broadcasts a second inquiry, and obtains device information from the devices to be searched (item 350 in FIG. 5). The remote loudspeaker 201 and the headphones 203, provide device information in response to the first inquiry, also provide the device information as well as when receiving the second inquiry (item 370 in FIG. 5). This is because the remote loudspeaker 201 and the headphones 203 are placed in an Enabled state for both inquiries. In addition, when broadcasting the second inquiry, the remote loudspeaker 202 also returns the device information (item 360 in FIG. 5).

The audio player 103 stores the obtained device information in the acquired information storage unit 1032. At the same time, the set of the devices from which the device information is obtained at this time is stored as second set (Q). The second set (Q) is as shown in FIG. 7.

The connection object selector 1033 of the audio player 103, referring to the sets (P) and (Q) stored in the acquired information storage unit 1032, compares the first set (P) and the second set (Q), and pick up the device information which is not included in the first set (P) and is included in the second set (Q). This comparison is similar to a logical subtraction, when the first set (P) is subtracted from the second set (Q). The picked-up device information is stored as a third set (R) in the acquired information storage unit 1032. (see item 380 in FIG. 5). The set (R) is as shown in FIG. 8.

As shown in FIG. 8, the device included in the third set (R) is only the remote loudspeaker 202 as the device being searched for the connection. In this way, thus, the connection object selector 1033 detects and identifies the desired device. As a result, using the device information of the remote loudspeaker 202 already stored in the acquired information storage unit 1032, the audio player 103 executes communication connection process with the remote loudspeaker 202 (see item 390 in FIG. 5).

In order to enhance the accuracy of the device included in the third set (R) to coincide with the remote loudspeaker 202 as the device being searched for the connection, the device in the third set (R) may be collated with the attribute information stored in the connection object attribute storage unit 1035.

That is, the connection object selecting method of the embodiment may be to select the desired device according to the following outline.

It is only the specific device to be connected (hereinafter referred to as the "desired device") that the state is intentionally changed in an attempt to provide device information by the device information provider 2021 from the targeted device being searched. Hence, the desired device is not included in the first set (P), but is expected to be included in the second set (Q).

For a relatively short period of time when the procedure in the connection object selecting method of the embodiment is executed, it is expected that the state whether or not to provide the information of other devices is hardly changed. Therefore, all other devices except the desired device are expected to be included in both first set (P) and second set (Q).

Therefore, when the device information included in the first set (P) is deleted from the device information included in the second set (Q), the third set (R) should result in including only the desired device. However, depending on the circumstances, the third set (R) may occur in the following cases, the accuracy may be enhanced by further modifying the procedure.

Examples of the third set (R) are shown below.

(Case 1) Only the specific (desired) device to be connected is included.

(Case 2) The other devices are included together with the desired device.

(Case 3) The desired device is not included, but only other devices are included.

(Case 4) No device is included.

In (Case 1), the desired device is obtained. In (Case 2) and (Case 3), other devices than the desired device are included in the third set (R), and the intended candidate of connection object is not obtained. In (Case 2), the device attribute as mentioned above is used to identify and confirm the desired device. Further, in both (Case 2) and (Case 3), in order that other devices than the desired device may be more securely included in the first set (P), the device information acquisition operation in terms of the first inquiry may be repeated until the number of devices included in the first set (P) is saturated and/or is not changed for a predetermined time.

In (Case 4), the cause is that the desired device is not included in the second set (Q). In such an event, the device information acquisition operation by using the second inquiry may be continued until the desired device which is not included in the set (P) shows up, or the operation may be repeated until the number of devices included in the second set (Q) is saturated and/or is not changed for a predetermined time, so that the desired device may be included in the second set (Q) more securely. Not waiting until the number of elements in the second set (Q) is saturated as in the latter case, if the device information acquisition operation is stopped when the desired device which is not included in the first set (P) shows up in the second set (Q) as in the former case. As far as it is certain that all other devices than desired are contained in the first set (P), it is effective to shorten the required time in the operation using the second inquiry. By combining these techniques, the connection object candidate may be obtained more securely.

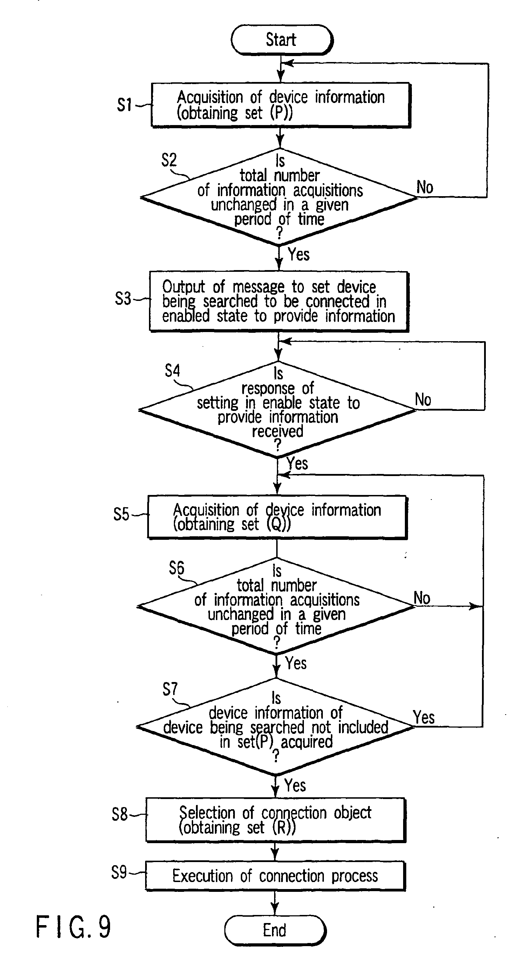

Next, referring to FIG. 9, the flow of operation in the case that the audio player 103 selects the remote loudspeaker 202 as the connection object will be described hereafter.

Under the condition that the wireless communication unit 24 of the remote loudspeaker 202 is turned off by operation of the switch 24S, the user operates the user interface unit 15 of the audio player 103 so as to start to broadcast a first inquiry for searching. That is, the user instructs the audio player 103 to establish the communication connection with the device being searched (e.g., the remote loudspeaker 202), the audio player 103 starts to obtain device information from the devices being searched by using the first inquiry (operation S1). This acquisition of device information continues until the acquired device information does not increase in a given period of time, and obtains the set (P).

When there is no increase in the given period of time (Yes in operation S2), the audio player 103 terminates the device information acquisition, and displays a message on the display in the user interface unit 15. The message is to inform the user to set the device being searched for the connection in the Enabled state more specifically to encourage the user to turn on the switch 24S of the remote loudspeaker (operation S3).

The user waits for display of this message, and then places the remote loudspeaker 202 in the Enabled state to provide information by turning on the switch 24S in accordance with the message. At the time, the remote loudspeaker 201 and the headphones 203 as other devices being searched may be set in any state, but not be changed to the other state.

In the meantime, after displaying of the message, the audio player 103 waits for response or instruction from the user about this message (operation S4).

After the Switch 24S is turned on, the user operates the button in the user interface unit 15 to input "Completion of turning on" into the audio player 103. That is, the audio player 103 is instructed to start to broadcast a second inquiry to establish the communication connection.

When receiving the instruction from the user (Yes in operation S4), device information acquisition is started to gather device information from the devices being searched by broadcasting the second inquiry (operation S5). This acquisition of device information continues until there is no increase in a given period of time and device information is obtained from a device being searched of which device information is not obtained in the first device information acquisition. When these conditions are satisfied (Yes in operation S6, Yes in operation S7), the audio player 103 obtains the set (Q), and finishes this device information acquisition.

After the second device information acquisition, the audio player 103 obtains the set (R) that includes the device information being searched for the connection, from the difference between the device information (set (Q)) obtained in the second device information acquisition and the device information (set (P)) obtained in the first device information acquisition. At this time, when only the device information of the remote loudspeaker 202 may be included in the set (R), the audio player 103 selects the device information to be connected (operation S8). Then the audio player 103 executes connection process with the selected device being searched (operation S9).

Thus, according to the connection object selecting method of the embodiment, by a simple procedure such as turning on/off of the wireless communication unit 24 of the remote loudspeaker 202 as the device being searched to be connected, the audio player 103 may select the remote loudspeaker 202 as the connection object.

According to the present embodiment, the wireless communication unit 24 is turned off during first device information acquisition, and is turned on during second device information acquisition. However, the wireless communication unit 24 may be turned on during first device information acquisition and turned off during second device information acquisition. In this case, the device that did respond to the first inquiry and did not respond to the second inquiry is detected as the connection object.

Furthermore, instead of on/off of the communication unit 24, it is possible to turn on/off the power of the remote loudspeaker 202.

As described herein, a communication unit in the connection object selecting method of the embodiment may be either wireless communication or wired communication having plural devices connected in the communication enable state such as Local Area Network, so-called LAN. It may be effective in the case that the devices to be connected are remote in distance because of spatial spacing between devices, or input of information for identifying the device at the connection object is difficult, or input of connection object information is complicated because the devices at connection object are changed frequently.

In the embodiment described above, when the set (R) is in (Case 2), that is, when there are plural candidates of connection object, they are reduced by using the attribute information of the device. But if the user interface unit 15 of the audio player 103 has, for example, a small LCD with a display space of three lines, in the condition that the number of candidates of connection object is within three, they may be listed and displayed as choices to be selected by the user.

Further, according to the above-described embodiment, the user interface unit includes the small LCD for message display, and operation buttons for instruction. However, it may be replaced with audio input/output unit such as a loudspeaker and microphone, and the notice to the user and acceptance of response may be realized by voice.

## Claims

1. A communication device for communicating with an external device, comprising:
a communication unit (1034);
means (1031) for conducting at least two inquiries for external devices surrounding the communication device, the at least two inquiries being transmitted through the communication unit;
means (1031) for receiving responses to each inquiry, each response including information from one or more of the external devices;
means (1033) for detecting one of the external devices as a connection object in accordance with a difference between the received responses; and
means (1030) for establishing a communication connection exclusively with the detected connection objects,
**characterized in that** the means for conducting the at least two inquiries are adapted to conduct a first inquiry and a second inquiry, and the detecting means are adapted to detect one of the external devices being an external device that did not provide a response within a first period of time corresponding to the first inquiry, and did provide a response within a second period of time corresponding to the second inquiry as the exclusive connection object.

2. The communication device according to claim 1, wherein the first period of time is variable.

3. The communication device according to claim 2,
**characterized in that** the first period of time is until a total number of external devices that have provided a response does not change within a given time period.

4. The communication device according to claim 1, wherein the second time is variable.

5. The communication device according to claim 2, wherein the second period of time is until the receiving means receives a response from an external device that the receiving means did not receive a response provided for the first period of time.

6. The communication device according to claim 4, wherein the second period of time is until a total number of external devices providing a response does not change within a given time period.

7. The communication device according to claim 1, wherein each of the responses includes a device information indicating at least one attribute of an external device of the external devices providing the response.

8. The communication device according to claim 7, further comprising:
means (1035) for storing attribute information showing the attribute of the external device to be detected as the connection object.

9. The communication device according to claim 8, wherein the detecting means comprises:
means for extracting a device information of the external device from that the receiving means did not receive the device information for the first period of time, that the receiving means did receive the device information for the second period of time, and that coincides with the attribute shown by the attribute information stored in the storing means; and
means for selecting the external device extracted by the extracting means as the connection object.

10. The communication device according to claim 1, further comprising:
means (15) for displaying the external devices detected by the detecting means when the external devices detected are two or more but within a predetermined number; and
means (15) for inputting information indicating one of the external devices selected as a connection object, and means for establishing the communication connection with the external device indicated by the information from the inputting means.

11. The communication device according to claim 1, further comprising:
means (15) for informing that searching in the first period of time is complete; and
means (15) for inputting instruction which requests the searching means to search an external device for the second period of time.

12. The communication device according to claim 11, wherein the inputting means comprises an audio input device for input of the instruction.

13. The communication device according to claim 12, wherein the informing means comprises a speaker.

14. The communication device according to claim 1, wherein the means for conducting the at least two inquiries comprises a device information acquisition unit.

15. The communication device according to any of claims 1 to 14, wherein the communication unit is a wireless communication unit.

16. A method for establishing a radio connection between communication devices, comprising:
setting a first communication device in a first condition in which the first communication device does not respond to an inquiry;
outputting (S1) a first inquiry from a second communication device so as to receive a response from a communication device surrounding the second communicating device;
setting the first communication device in a second condition in which the first communication device responds to an inquiry;
outputting (S5) a second inquiry from the second communication device so as to receive a response from a communication device surrounding the second communication device;
detecting (S8) one of the communication devices as the first communication device that did not respond to the first inquiry and did respond to the second inquiry; and
establishing (S9) an exclusive connection between the detected first communication device and the second communication device.

17. The method according to claim 16, wherein the setting of the first communication device in the second condition and outputting of the second inquiry occurs before the setting of the first communication device in the first condition and the outputting of the first inquiry.

## Patentansprüche

1. Kommunikationsvorrichtung zum Kommunizieren mit einer externen Vorrichtung, mit:
einer Kommunikationseinheit (1034);
einem Mittel (1031) zum Durchführen von mindestens von zwei Anfragen für externe Vorrichtungen, die die Kommunikationsvorrichtung umgeben, wobei die mindestens zwei Anfragen durch die Kommunikationseinheit übertragen werden;
einem Mittel (1031) zum Empfangen von Antworten auf jede Anfrage, wobei jede Antwort Information von einer oder mehreren der externen Vorrichtungen aufweist;
einem Mittel (1033) zum Erfassen einer der externen Vorrichtungen als ein Verbindungsobjekt in Übereinstimmung mit einer Differenz zwischen den empfangenen Antworten; und
einem Mittel (1030) zum Aufbauen einer Kommunikationsverbindung ausschließlich mit dem erfassten Verbindungsobjekt,
**dadurch gekennzeichnet, dass** die Mittel zum Durchführen der mindestens zwei Anfragen angepasst sind, um eine erste Anfrage und eine zweite Anfrage durchzuführen, und die Erfassungsmittel angepasst sind, um eine der externen Vorrichtungen, die eine externe Vorrichtung ist, die keine Antwort innerhalb einer ersten Zeitspanne entsprechend der ersten Anfrage und eine Antwort innerhalb einer zweiten Zeitspanne entsprechend der zweiten Anfrage geliefert hat, als das ausschließliche Verbindungsobjekt zu erfassen.

2. Kommunikationsvorrichtung gemäß Anspruch 1, bei der die erste Zeitspanne variabel ist.

3. Kommunikationsvorrichtung gemäß Anspruch 2, **dadurch gekennzeichnet, dass** die erste Zeitspanne andauert, bis eine Gesamtzahl von externen Vorrichtungen, die eine Antwort geliefert haben, sich nicht innerhalb einer gegebenen Zeit ändert.

4. Kommunikationsvorrichtung gemäß Anspruch 1, bei der die zweite Zeit variabel ist.

5. Kommunikationsvorrichtung gemäß Anspruch 2, bei der die zweite Zeitspanne dauert, bis das Empfangsmittel eine Antwort von einer externen Vorrichtung empfängt, das das Empfangsmittel keine Antwort empfangen hat, die für die erste Zeitspanne geliefert wurde.

6. Kommunikationsvorrichtung gemäß Anspruch 4, bei der die zweite Zeitspanne dauert, bis eine Gesamtzahl von externen Vorrichtungen, die eine Antwort liefern, sich nicht innerhalb einer gegebenen Zeit ändert.

7. Kommunikationsvorrichtung gemäß Anspruch 1, bei der jede der Antworten eine Vorrichtungsinformation aufweist, die mindestens ein Attribut einer externen Vorrichtung der externen Vorrichtungen angibt, die die Antwort liefern.

8. Kommunikationsvorrichtung gemäß Anspruch 7, ferner mit:
einem Mittel (1035) zum Speichern von Attributinformation, die das Attribut der externen Vorrichtung zeigt, die als das Verbindungsobjekt zu erfassen ist.

9. Kommunikationsvorrichtung gemäß Anspruch 8, bei der das Erfassungsmittel umfasst:
einem Mittel zum Extrahieren einer Vorrichtungsinformation der externen Vorrichtung, von der das Empfangsmittel die Vorrichtungsinformation für die erste Zeitspanne nicht empfangen hat, von der das Empfangsmittel die Vorrichtungsinformation für die zweite Zeitspanne empfangen hat und die mit dem Attribut koinzidiert, das durch die in dem Speichermittel gespeicherte Attributinformation gezeigt wird; und
einem Mittel zum Auswählen der durch das Extrahiermittel extrahierten externen Vorrichtung als das Verbindungsobjekt.

10. Kommunikationsvorrichtung gemäß Anspruch 1, ferner mit:
einem Mittel (15) zum Anzeigen der durch das Erfassungsmittel erfassten externen Vorrichtungen, wenn die erfassten externen Vorrichtungen zwei oder mehr, jedoch innerhalb einer vorbestimmten Anzahl, sind; und
einem Mittel (15) zum Eingeben von Information, die eine der als ein Verbindungsobjekt ausgewählten externen Vorrichtungen angibt, und
einem Mittel zum Aufbauen der Kommunikationsverbindung mit der durch die Information von dem Eingabemittel angegebenen externen Vorrichtung.

11. Kommunikationsvorrichtung gemäß Anspruch 1, ferner mit:
einem Mittel (15) zum Mitteilen, dass das Suchen in der ersten Zeitspanne abgeschlossen ist; und
einem Mittel (15) zum Eingeben einer Anweisung, die das Suchmittel anfordert, eine externe Vorrichtung für die zweite Zeitspanne zu suchen.

12. Kommunikationsvorrichtung gemäß Anspruch 11, bei der das Eingabemittel eine Audio-Eingabevorrichtung zur Eingabe der Anweisung umfasst.

13. Kommunikationsvorrichtung gemäß Anspruch 12, bei der das Mitteilungsmittel einen Lautsprecher umfasst.

14. Kommunikationsvorrichtung gemäß Anspruch 1, bei der das Mittel zum Durchführen der mindestens zwei Anfragen eine Vorrichtungsinformations-Akquisitionseinheit umfasst.

15. Kommunikationsvorrichtung gemäß einem der Ansprüche 1 bis 14, bei der die Kommunikationseinheit eine drahtlose Kommunikationseinheit ist.

16. Verfahren zum Aufbauen einer Funkverbindung zwischen Kommunikationsvorrichtungen, mit:
Einstellen einer ersten Kommunikationsvorrichtung in einen ersten Zustand, bei dem die erste Kommunikationsvorrichtung nicht auf eine Anfrage antwortet;
Ausgeben (S1) einer ersten Anfrage von einer zweiten Kommunikationsvorrichtung, um eine Antwort von einer Kommunikationsvorrichtung zu empfangen, die die zweite Kommunikationsvorrichtung umgibt;
Einstellen der ersten Kommunikationsvorrichtung in einen zweiten Zustand, bei dem die erste Kommunikationsvorrichtung auf eine Anfrage antwortet;
Ausgeben (S5) einer zweiten Anfrage von der zweiten Kommunikationsvorrichtung, um eine Antwort von einer Kommunikationsvorrichtung zu empfangen, die die zweite Kommunikationsvorrichtung umgibt;
Erfassen (S8) einer der Kommunikationsvorrichtungen als die erste Kommunikationsvorrichtung, die nicht auf die erste Anfrage antwortete und auf die zweite Anfrage antwortete; und
Aufbauen (S9) einer ausschließlichen Verbindung zwischen der erfassten ersten Kommunikationsvorrichtung und der zweiten Kommunikationsvorrichtung.

17. Verfahren gemäß Anspruch 16, bei dem das Einstellen der ersten Kommunikationsvorrichtung in den zweiten Zustand und das Ausgeben der zweiten Anfrage vor dem Einstellen der ersten Kommunikationsvorrichtung in den ersten Zustand und dem Ausgeben der ersten Anfrage stattfindet.

## Revendications

1. Dispositif de communication destiné à communiquer avec un dispositif externe, comprenant :
une unité de communication (1034),
un moyen (1031) destiné à réaliser au moins deux interrogations pour les dispositifs externes entourant le dispositif de communication, les au moins deux interrogations étant transmises au travers de l'unité de communication,
un moyen (1031) destiné à recevoir des réponses à chaque interrogation, chaque réponse comprenant des informations provenant d'un ou plusieurs des dispositifs externes,
un moyen (1033) destiné à détecter l'un des dispositifs externes en tant qu'objet de connexion conformément à une différence entre les réponses reçues, et
un moyen (1030) destiné à établir une connexion de communication exclusivement avec l'objet de connexion détecté,
**caractérisé en ce que** le moyen destiné à réaliser les au moins deux interrogations est conçu pour réaliser une première interrogation et une seconde interrogation, et le moyen de détection est conçu pour détecter l'un des dispositifs externes qui est un dispositif externe qui ne fournit pas de réponse au cours d'un premier intervalle de temps correspondant à la première interrogation et fournit une réponse au cours d'un second intervalle de temps correspondant à la seconde interrogation en tant qu'objet de connexion exclusive.

2. Dispositif de communication selon la revendication 1, dans lequel le premier intervalle de temps est variable.

3. Dispositif de communication selon la revendication 2, **caractérisé en ce que** le premier intervalle de temps est un temps qui dure tant qu'un nombre total des dispositifs externes qui ont fourni une réponse ne change pas au cours d'un intervalle de temps donné.

4. Dispositif de communication selon la revendication 1, dans lequel le second intervalle de temps est variable.

5. Dispositif de communication selon la revendication 2, dans lequel le second intervalle de temps est un temps qui dure jusqu'à ce que le moyen de réception reçoive une réponse d'un dispositif externe dont le moyen de réception n'a pas reçu une réponse fournie pendant le premier intervalle de temps.

6. Dispositif de communication selon la revendication 4, dans lequel le second intervalle de temps est un temps qui dure tant qu'un nombre total de dispositifs externes fournissant une réponse ne change pas au cours d'un intervalle de temps donné.

7. Dispositif de communication selon la revendication 1, dans lequel chacune des réponses comprend des informations de dispositif indiquant au moins un attribut d'un dispositif externe des dispositifs externes fournissant la réponse.

8. Dispositif de communication selon la revendication 7, comprenant en outre :
un moyen (1035) destiné à mémoriser des informations d'attribut représentant l'attribut du dispositif externe devant être détecté en tant que l'objet de connexion.

9. Dispositif de communication selon la revendication 8, dans lequel le moyen de détection comprend :
un moyen destiné à extraire des informations de dispositif du dispositif externe duquel le moyen de réception n'a pas reçu les informations de dispositif pendant le premier intervalle de temps, duquel le moyen de réception a reçu les informations de dispositif pendant le second intervalle de temps, et qui coïncident avec l'attribut représenté par les informations d'attribut mémorisées dans le moyen de mémorisation, et
un moyen destiné à sélectionner le dispositif externe extrait par le moyen d'extraction en tant qu'objet de connexion.

10. Dispositif de communication selon la revendication 1, comprenant en outre :
un moyen (15) destiné à afficher les dispositifs externes détectés par le moyen de détection lorsque les dispositifs externes détectés sont de deux ou plus mais dans les limites d'un nombre prédéterminé, et
un moyen (15) destiné à appliquer en entrée des informations indiquant l'un des dispositifs externes sélectionné en tant qu'objet de connexion, et
un moyen destiné à établir la connexion de communication avec le dispositif externe indiqué par les informations provenant du moyen d'application en entrée.

11. Dispositif de communication selon la revendication 1, comprenant en outre :
un moyen (15) destiné à informer que la recherche dans le premier intervalle de temps est achevée, et
un moyen (15) destiné à appliquer en entrée une instruction qui demande au moyen de recherche de rechercher un dispositif externe pendant le second intervalle de temps.

12. Dispositif de communication selon la revendication 11, dans lequel le moyen d'entrée comprend un dispositif d'entrée audio pour l'entrée de l'instruction.

13. Dispositif de communication selon la revendication 12, dans lequel le moyen d'information comprend un haut-parleur.

14. Dispositif de communication selon la revendication 1, dans lequel le moyen destiné à réaliser les au moins deux interrogations comprend une unité d'acquisition d'informations du dispositif.

15. Dispositif de communication selon l'une quelconque des revendications 1 à 14, dans lequel l'unité de communication est une unité de communication sans fil.

16. Procédé destiné à établir une connexion radio entre les dispositifs de communication, comprenant les étapes consistant à :
établir un premier dispositif de communication dans une première condition dans laquelle le premier dispositif de communication ne répond pas à une interrogation,
fournir en sortie (S1) une première interrogation à partir d'un second dispositif de communication de manière à recevoir une réponse d'un dispositif de communication entourant le second dispositif de communication,
établir le premier dispositif de communication dans une seconde condition dans laquelle le premier dispositif de communication répond à une interrogation,
fournir en sortie (S5) une seconde interrogation à partir du second dispositif de communication de manière à recevoir une réponse d'un dispositif de communication entourant le second dispositif de communication,
détecter (S8) l'un des dispositifs de communication en tant que le premier dispositif de communication qui ne répond pas à la première interrogation et répond à la seconde interrogation, et
établir (S9) une connexion exclusive entre le premier dispositif de communication détecté et le second dispositif de communication.

17. Procédé selon la revendication 16, dans lequel l'établissement du premier dispositif de communication dans la seconde condition et la fourniture en sortie de la seconde interrogation se produisent avant l'établissement du premier dispositif de communication dans la première condition et la fourniture en sortie de la première interrogation.
